# EUROPÄISCHE PATENTSCHRIFT

(11) **EP 0 726 399 B1**
(45) Veröffentlichungstag und Bekanntmachung des Hinweises auf die Patenterteilung: **20.01.1999**
(21) Anmeldenummer: 95120541.8
(22) Anmeldetag: 27.12.1995
(51) Int. Cl.: F16B 13/06

(54) **Spreizdübel für die Verankerung in einem eine Hinterschneidung aufweisenden Bohrloch**
Expansion plug to be anchored in an undercut borehole
Cheville d'expansion pour l'ancrage dans un trou à contre-dépouille

(30) Priorität: 09.02.1995 DE 19504216
(43) Veröffentlichungstag der Anmeldung: 14.08.1996
(73) Patentinhaber: fischerwerke Artur Fischer GmbH & Co. KG, D-72178 Waldachtal (DE)
(72) Erfinder: Fischer, Arthur, Prof. Dr. h.c. Dr.-Ing- E.h., D-72178 Waldachtal (DE)

(56) Entgegenhaltungen:
- EP-A- 0 455 952
- DE-A- 3 031 048
- DE-A- 3 124 685
- DE-A- 3 820 759
- DE-A- 4 037 963
- DE-U- 9 303 899
- FR-A- 2 346 591

## Beschreibung

Die Erfindung betrifft einen Spreizdübel für die Verankerung in einem eine Hinterschneidung aufweisenden Bohrloch, bestehend aus einem Gewindebolzen und einer Spreizhülse gemäß der Gattung des Anspruches 1.

Aus der DE 31 24 685 C2 ist ein Spreizdübel bekannt, der aus einem an seinem vorderen Ende einen Spreizkonus aufweisenden Gewindebolzen und einer Spreizhülse besteht, die von ihrem vorderen Ende ausgehende und über einen Teil ihrer Länge sich erstreckende Längsschlitze aufweist. Zur Verankerung des Spreizdübels in einem am Bohrlochgrund eine Hinterschneidung aufweisenden Bohrloch wird die Spreizhülse auf den Spreizkonus des sich am Bohrlochgrund abstützenden Gewindebolzens aufgetrieben. Dabei werden die durch die Längsschlitze gebildeten Spreizsegmente der Spreizhülse in die Hinterschneidung eingebogen. Es entsteht somit eine formschlüssige Verankerung, die aufgrund der in der Hinterschneidung eingebogenen Spreizsegmente in der Lage ist, eine Bohrlocherweiterung durch Rißbildung auszugleichen. Damit wird der bekannte Spreizdübel insbesondere bei Verankerungen in der Zugzone eingesetzt, in der üblicherweise Rißbildung auftritt.

Die Funktion des bekannten Spreizdübels wird allerdings dann beeinträchtigt, wenn an dem Dübel dynamische Lasten angreifen bzw. der Verankerungsgrund dynamischen Belastungen unterworfen ist. Durch ständige Be- und Entlastungen des Dübels bzw. des Ankergrundes schließen und öffnen sich die Risse, so daß durch den ständigen Wechsel des von der Bohrlochwandung auf die Spreizhülse ausgeübten Spreizdrucks die Bohrlochwandung im Verankerungsbereich durch die aus Metall bestehende harte Spreizhülse allmählich ausgerieben wird.

Der Erfindung liegt die Aufgabe zugrunde, einen Spreizdübel für die Verankerung in einem eine Hinterschneidung aufweisenden Bohrloch zu schaffen, der für Befestigungen in der dynamisch belasteten Zugzone und/oder zur Aufnahme dynamischer Lasten geeignet ist.

Die Lösung dieser Aufgabe wird durch die im Anspruch 1 angegebenen Merkmale erreicht. Durch die Verwendung eines faserverstärkten hochfesten Kunststoffes für die Spreizhülse anstelle von Metall werden in einem eine Hinterschneidung aufweisenden Bohrloch durch den Formschluß ebenfalls ausreichend hohe Haltewerte aufgrund der hohen Druck- und Kriechfestigkeit des Kunststoffes erzielt. Aufgrund der geringeren Härte des Kunststoffes gegenüber Metall und der besseren Gleitfähigkeit wird jedoch ein Ausreiben des Bohrloches bei dynamischen Lasten durch ständiges Öffnen und Schließen des Risses vermieden. Die durch die Bohrlochwandung auf die Spreizhülse wirkenden Kräfte werden durch die Materialelastizität einerseits und geringfügige axiale Bewegungen der Spreizhülse auf dem Spreizkonus andererseits aufgenommen.

Die Verwendung des faserverstärkten, hochfesten Kunststoffes für die Spreizhülse setzt allerdings eine Ausbildung der Spreizhülse voraus, die ein Aufspreizen des Spreizdübels in einem eine Hinterschneidung aufweisenden Bohrloch ermöglicht. Gemäß der Erfindung wird dies dadurch erreicht, daß sich an einen am vorderen Ende der Spreizhülse angeordneten zylindrischen Abschnitt eine sich zum hinteren Ende der Spreizhülse konisch verjüngende Ringkerbe anschließt, die im Bereich des Schlitzendes durch eine Ausrundung begrenzt ist. Durch diese Ausbildung ergibt sich eine als Gelenk wirkende Querschnittsschwächung, die ein Aufbiegen der durch die Längsschlitze gebildeten Spreizsegmente ohne Abbrechen ermöglicht. Die Außenfläche des zylindrischen Abschnittes der Spreizhülse kommt dabei an der Wandung der V-förmigen Hinterschneidung zur Anlage, während das Ende der Ringkerbe im Bereich des zylindrischen Teils des Bohrloches liegt.

Als besonders geeigneter Werkstoff hat sich ein teil- oder vollaromatisches, mit Glasoder Kohlefasern verstärktes Polyamid oder Polycarbonat erwiesen, dessen Zugfestigkeit mindestens 100 N/mm² beträgt.

Ein günstiges Aufklappen der Spreizsegmente wird dadurch erreicht, daß der kleinste Durchmesser der Ringkerbe etwa dem mittleren Durchmesser der Differenz des Außendurchmessers und des Innendurchmessers der Spreizhülse entspricht.

Eine flächige Anlage der Spreizsegmente an der Wandung der Hinterschneidung kann dadurch erreicht werden, daß die Länge des zylindrischen Abschnittes am vorderen Ende der Spreizhülse etwa dem Durchmesser der Innenbohrung und die Länge der Ringkerbe etwa dem Außendurchmesser der Spreizhülse entspricht.

In der Zeichnung ist ein Ausführungsbeispiel der Erfindung dargestellt.

Es zeigen:
- Figur 1: den Spreizdübel im Teillängsschnitt vor der Verankerung und
- Figur 2: den Spreizdübel nach Figur 1 im Längsschnitt nach der Verankerung.

Der Spreizdübel 1 besteht aus dem Gewindebolzen 2 mit kegelförmigem Spreizkonus 3, und der über einen Teil ihrer Länge mit Längsschlitzen 4 versehenen Spreizhülse 5. Die Spreizhülse 5 ist auf den Gewindebolzen 2 soweit übergestülpt, daß das vordere Ende 6 der Spreizhülse 5 auf dem Spreizkonus 3 aufsitzt. Am vorderen Ende der Spreizhülse 5 ist ein zylindrischer Abschnitt 7 vorgesehen, dessen Außendurchmesser etwa dem zylindrischen Teil des Bohrloches 8 entspricht. Im Bereich des Bohrlochgrundes weist das Bohrloch 8 im Verankerungsgrund 9 eine Hinterschneidung 10 auf. An den zylindrischen Abschnitt 7 der Spreizhülse 5 schließt sich eine Ringkerbe 11 an, die sich zum hinteren Ende der Spreizhülse 5 konisch verjüngt. Die Ringkerbe 11 wird durch eine Ausrundung 12 begrenzt.

Durch die Ringkerbe 11 entsteht eine Querschnittsschwächung 13, die beim Aufklappen der durch die Längsschlitze 4 gebildeten Spreizsegmente als Gelenk wirkt. Die leichte Aufspreizbarkeit ermöglicht es, die Spreizhülse 5 aus einem faserverstärkten, hochfesten Kunststoff herzustellen, beispielsweise aus einem teil- oder vollaromatischen, mit Glas- oder Kohlefasern verstärkten Polyamid oder Polycarbonat mit einer Mindestzugfestigkeit von 100 N/mm².

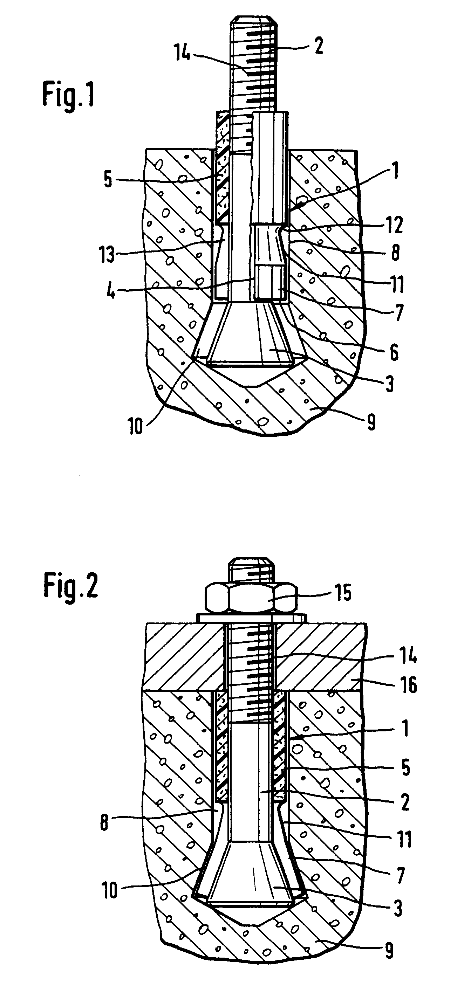

In Figur 2 ist der Spreizdübel 1 nach Figur 1 nach der Verankerung dargestellt. Die Verankerung des Spreizdübels erfolgt durch Auftreiben der Spreizhülse 5 auf den Spreizkonus 3 des sich am Bohrlochgrund abstützenden Gewindebolzens 2 mittels eines nicht dargestellten Einschlagwerkzeuges. Dabei gleitet der zylindrische Abschnitt 7 der Spreizhülse 5 auf den Spreizkonus 3 auf und füllt den Spalt zwischen dem Spreizkonus 3 und der Wandung der Hinterschneidung 10 aus. Dadurch ergibt sich eine formschlüssige Verankerung des Spreizdübels 1 im Bohrloch 8 des Verankerungsgrundes 9. Nach der Verankerung kann auf das Gewinde 14 des Gewindebolzens 2 mittels einer Mutter 15 ein Gegenstand 16 am Verankerungsgrund 9 befestigt werden.

## Patentansprüche

1. Spreizdübel für die Verankerung in einem eine Hinterschneidung aufweisenden Bohrloch, bestehend aus einem an seinem vorderen Ende einen Spreizkonus aufweisenden Gewindebolzen und einer Spreizhülse, die von ihrem vorderen Ende ausgehend und über einen Teil ihrer Länge sich erstreckende Längsschlitze aufweist, **dadurch gekennzeichnet,** daß sich an einen am vorderen Ende (6) der Spreizhülse (5) angeordneten zylindrischen Abschnitt (7) eine sich zum hinteren Ende der Spreizhülse (5) konisch verjüngende Ringkerbe (11) anschließt, die im Bereich des Schlitzendes durch eine Ausrundung (12) begrenzt ist, und daß zumindest die Spreizhülse (5) aus einem faserverstärkten, hochfesten Kunststoff besteht.

2. Spreizdübel nach Anspruch 1, **dadurch gekennzeichnet,** daß der Kunststoff ein teil- oder vollaromatisches, mit Glas- oder Kohlefasern verstärktes Polyamid, Polycarbonat oder dgl. mit einer Mindestzugfestigkeit von 100 N/mm² ist.

3. Spreizdübel nach Anspruch 1, **dadurch gekennzeichnet,** daß der kleinste Durchmesser der Ringkerbe (11) etwa dem mittleren Durchmesser der Differenz des Außendurchmessers und des Innendurchmessers der Spreizhülse (5) entspricht.

4. Spreizdübel nach Anspruch 1, **dadurch gekennzeichnet,** daß die Länge des zylindrischen Abschnittes (7) am vorderen Ende (6) der Spreizhülse (5) etwa dem Durchmesser der Innenbohrung und die Länge der Ringkerbe (11) etwa dem Außendurchmesser der Spreizhülse (5) entspricht.

## Claims

1. An expansible plug for anchoring in a drilled hole having an undercut, consisting of a threaded bolt having an expander cone at the leading end thereof, and an expansible sleeve which has longitudinal slits starting from its leading end and extending for a part of its length,
characterized in that adjoining a cylindrical portion (7) arranged at the leading end (6) of the expansible sleeve (5), there is an annular groove (11) which tapers towards the rear end of the expansible sleeve (5), which groove is bounded in the region of the slit end by a rounded portion (12), and in that at least the expansible sleeve (5) consists of a fibre-reinforced, high-strength plastics material.

2. An expansible plug according to claim 1, characterized in that the plastics material is a partially or fully aromatic, glass fibre-reinforced or carbon fibre-reinforced polyamide, polycarbonate or similar material, having a minimum tensile strength of 100 N/mm².

3. An expansible plug according to claim 1, characterized in that the smallest diameter of the annular groove (11) corresponds approximately to the mean diameter of the difference between the external diameter and the internal diameter of the expansible sleeve (5).

4. An expansible plug according to claim 1, characterized in that the length of the cylindrical portion (7) at the leading end (6) of the expansible sleeve (5) corresponds approximately to the diameter of the internal bore and the length of the annular groove (1) corresponds approximately to the external diameter of the expansible sleeve (5).

## Revendications

1. Cheville à expansion pour l'ancrage dans un trou présentant une contre-dépouille, constituée d'une tige filetée présentant à son extrémité avant un cône à expansion et d'une douille à expansion qui présente des fentes longitudinales partant de son extrémité avant et s'étendant sur une partic de sa longueur, caractérisée par le fait qu'à un tronçon cylindrique (7) disposé à l'extrémité avant (6) de la douille à expansion (5) se raccorde une encoche annulaire (11) qui va en diminuant en cône en direction de l'extrémité arrière de la douille à expansion (5) et qui, dans la zone de l'extrémité des fentes, est limitée par un arrondi (12) et qu'au moins la douille à expansion (5) est constituée d'un plastique à haute résistance, armé de fibres.

2. Cheville à expansion selon la revendication 1, caractérisée par le fait que le plastique est un polyamide, un polycarbonate ou analogue, partiellement ou totalement aromatique, armé de fibres de verre ou de carbone, d'une résistance minimale à la traction de 100 N/mm².

3. Cheville à expansion selon la revendication 1, caractérisée par le fait que le plus petit diamètre de l'encoche annulaire (11) correspond à peu près au diamètre moyen de la partie de la douille à expansion (5) comprise entre le diamètre extérieur et le diamètre intérieur.

4. Cheville à expansion selon la revendication 1, caractérisée par le fait que la longueur du tronçon cylindrique (7) prévu à l'extrémité avant (6) de la douille à expansion (5) correspond à peu près au diamètre du perçage intérieur et que la longueur de l'encoche annulaire (11) correspond à peu près au diamètre extérieur de la douille à expansion (5).
